# EUROPEAN PATENT APPLICATION

(11) **EP 3 441 640 A1**
(43) Date of publication of application: **13.02.2019**
(21) Application number: 17779162.1
(22) Date of filing: 05.04.2017
(51) Int. Cl.: F16F 9/508, F16F 9/32

(54) **SHOCK ABSORBER**

(30) Priority: 06.04.2016 JP 2016076256
(71) Applicant: KYB Corporation, Tokyo 105-6111 (JP)
(72) Inventor: INAMITSU, Kazutaka, Tokyo 105-6111 (JP); TERAOKA, Takashi, Tokyo 105-6111 (JP)
(74) Representative: MFG Patentanwälte Meyer-Wildhagen Meggle-Freund Gerhard PartG mbB
(86) International application number: PCT/JP2017/014192
(87) International publication number: WO 2017/175784

(57) **Abstract**

A shock absorber (A1) includes: a cylinder (1); a piston (2) that is movably inserted into the cylinder (1) and defines an extension side chamber (L1) and a compression side chamber (L2) inside the cylinder (1); an extension side damping passage (2a) and a compression side damping passage (2b) that communicate the extension side chamber (L1) with the compression side chamber (L2); a pressure chamber (P) that communicates with the extension side chamber (L1) and the compression side chamber (L2); and an elastic member (7) that defines a first chamber (P1) communicating with the extension side chamber (L1) and a second chamber (P2) communicating with the compression side chamber (L2) inside the pressure chamber (P).

## Description

### Technical Field

The present invention relates to a shock absorber.

### Background Art

Conventionally, a shock absorber is interposed between a vehicle body and an axle of a vehicle and is used to suppress a vibration of the vehicle body. For example, as disclosed in JP 4644572 (B2) and JP 4726049 (B2), the shock absorber includes a cylinder, a piston that is slidably inserted into the cylinder, a piston rod of which one end is connected to the piston and the other end extends to the outside of the cylinder, upper and lower chambers that are formed inside the cylinder and defined by the piston, first and second passages that communicate with the upper and lower chambers, a pressure chamber that is provided in the course of the second passage, a housing that has a pressure chamber formed therein and is attached to a front end of the piston rod, a free piston that is slidably inserted into the housing and defines the pressure chamber as one chamber communicating with the lower chamber and the other chamber communicating with the upper chamber, and a coil spring that exerts an urging force for suppressing a displacement of the free piston with respect to the pressure chamber.

In the shock absorber with such a configuration, the upper and lower chambers do not directly communicate with each other through the second passage. However, when the free piston moves, a volume ratio between one chamber and the other chamber in the pressure chamber changes and the liquid inside the pressure chamber flows into and out of the upper and lower chambers in response to the moving amount of the free piston. For this reason, the upper and lower chambers apparently communicate with each other through the second passage.

For this reason, the shock absorber can generate a high damping force with respect to the input of the low-frequency vibration and generate a low damping force with respect to the input of the high-frequency vibration.
Thus, the shock absorber can generate a high damping force in a case in which the input vibration frequency is low due to the turning or the like of the vehicle and the shock absorber can reliably generate a low damping force in a case in which the input vibration frequency is high due to the passage of the vehicle on the unevenness of the road. As a result, it is possible to improve the ride comfort of the vehicle.

### Summary of the Invention

However, in the above-described conventional shock absorber, the free piston defining the pressure chamber is made to slide on the inner circumference of the housing. Since high processing accuracy is required for a sliding portion in which two members slide on each other, the components are expensive.

Here, an object of the invention is to provide a shock absorber capable of exerting a damping force in response to a frequency and reducing cost.

In order to solve the above-described problems, the invention includes a damping passage that communicates two operation chambers defined by a piston, a pressure chamber that communicates with the two operation chambers, and an elastic member that defines the pressure chamber as a first chamber communicating with the one operation chamber and a second chamber communicating with the other operation chamber. According to the configuration, when the shock absorber performs the extension and compression operations, the elastic member is elastically deformed so that the volume ratio between the first chamber and the second chamber changes and the liquid inside the pressure chamber flows into and out of the first chamber and the second chamber in response to the amount of elastic deformation, and thus the liquid apparently has moved between two operation chambers through the pressure chamber. In addition, since a partition wall defining the pressure chamber is formed as the elastic member so that the partition wall does not slide, high processing accuracy is not required and components can be provided at low cost.

### Brief Description of Drawings

Fig. 1 is a front view illustrating a shock absorber according to a first embodiment of the invention in a partially notched state.
Fig. 2 is an enlarged longitudinal sectional view illustrating a part of Fig. 1.
Fig. 3 is a longitudinal sectional view illustrating a modified example of the shock absorber according to the first embodiment of the invention in a state in which a modified part is enlarged.
Fig. 4 is an enlarged longitudinal sectional view illustrating a part of a shock absorber according to a second embodiment of the invention.
Fig. 5 is a longitudinal sectional view illustrating a first modified example of the shock absorber according to the second embodiment of the invention in a state in which a modified part is enlarged.
Fig. 6 is a longitudinal sectional view illustrating a second modified example of the shock absorber according to the second embodiment of the invention in a state in which a modified part is enlarged.

### Description of Embodiments

Hereinafter, embodiments of the invention will be described with reference to the drawings. The same reference numerals given in several drawings indicate the same or corresponding components.

### <First Embodiment>

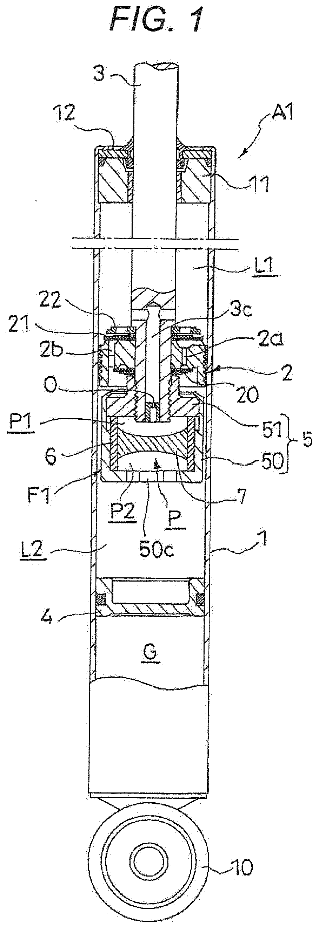

A shock absorber A1 according to a first embodiment of the invention illustrated in Fig. 1 exerts a damping force while being interposed between a vehicle body and an axle of a vehicle and suppresses a vibration of the vehicle body. The shock absorber A1 includes a cylinder 1, a piston 2 that is slidably inserted into the cylinder 1, a piston rod 3 of which one end is connected to the piston 2 and the other end extends to the outside of the cylinder 1, a frequency sensitive portion F1 that is attached to the lower side of the piston 2 of the piston rod 3 of Fig. 1, and a sliding partition wall 4 that is slidably inserted to the opposite piston rod side inside the cylinder 1.

Then, the cylinder 1 is connected to one of the vehicle body and the axle through the attachment member 10 and the piston rod 3 is connected to the other of the vehicle body and the axle through an attachment member (not illustrated). Thus, when the vehicle body and the axle move away from each other, the piston rod 3 retracts from the cylinder 1 so that the shock absorber A1 is extended. In contrast, when the vehicle body and the axle move close to each other, the piston rod 3 enters the cylinder 1 so that the shock absorber A1 is compressed.

An extension side chamber L1 and the compression side chamber L2 that are defined by the piston 2 are formed inside the cylinder 1 and a gas chamber G that is defined from the compression side chamber L2 by the sliding partition wall 4 is formed therein. The extension side chamber L1 and the compression side chamber L2 are operation chambers and are filled with a liquid such as hydraulic oil. Further, a gas is enclosed in the gas chamber G. The cylinder 1 is formed as a bottomed cylinder and an opening end portion of the cylinder 1 is provided with a rod guide 11 that movably and axially supports the piston rod 3 in the axial direction. Then, a gap between the cylinder 1 and the piston rod 3 is sealed by a seal member 12 laminated on the rod guide 11. Thus, the liquid and the gas inside the cylinder 1 do not leak to the outside of the cylinder 1 and the inside of the cylinder 1 is defined from external air.

Further, in the shock absorber A1, the piston rod 3 is formed as a single rod type to be inserted only into the extension side chamber L1 and compensates a change in cylinder internal volume corresponding to a piston rod protrusion volume by the gas chamber G. Specifically, the cylinder internal volume corresponding to the piston rod retraction volume increases during the extension operation of the shock absorber A1 in which the piston rod 3 retracts from the cylinder 1. However, since the sliding partition wall 4 moves upward in Fig. 1 to extend the gas chamber G, the amount of increased cylinder internal volume is compensated. In contrast, the cylinder internal volume corresponding to the piston rod entering volume decreases during the compression operation of the shock absorber A1 in which the piston rod 3 enters the cylinder 1. However, since the sliding partition wall 4 moves downward in Fig. 1 to compress the gas chamber G, the amount of decreased cylinder internal volume is compensated.

Next, the piston 2 is provided with an extension side damping passage 2a and a compression side damping passage 2b that are damping passages communicating the extension side chamber L1 and the compression side chamber L2 with each other. The outlets of the extension side damping passage 2a and the compression side damping passage 2b are provided with leaf valves 20 and 21 corresponding to damping force generation components. Then, the leaf valve 20 gives a resistance to the flow of the liquid passing through the extension side damping passage 2a and the leaf valve 21 gives a resistance to the flow of the liquid passing through the compression side damping passage 2b. Specifically, the leaf valve 20 is laminated on the lower side of the piston 2 in Fig. 1, opens and closes the outlet end of the extension side damping passage 2a, and sets the extension side damping passage 2a as a one-way passage that allows only the flow of the liquid from the extension side chamber L1 to the compression side chamber L2. The other leaf valve 21 is laminated on the upper side of the piston 2 in Fig. 1, opens and closes the outlet end of the compression side damping passage 2b, and sets the compression side damping passage 2b as a one-way passage that allows only the flow of the liquid from the compression side chamber L2 to the extension side chamber L1.

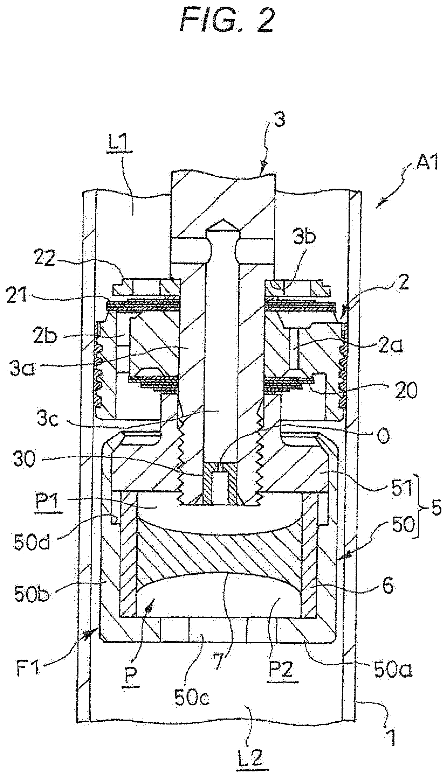

Further, an annular valve stopper 22 is laminated on the upper side of the leaf valve 21 in Fig. 1. All of the piston 2, the leaf valves 20 and 21, and the valve stopper 22 include center holes penetrating the center portions. Then, the leaf valve 21 and the valve stopper 22 are sequentially stacked on one side of the piston 2, the leaf valve 20 is stacked on the other side of the piston 2, a small diameter portion 3a (Fig. 2) of the piston rod 3 is inserted into the center holes from the valve stopper 22, and a housing 5 to be described later of the frequency sensitive portion F1 is threaded into a front end of the small diameter portion 3a. Then, the inner circumference portions of the piston 2, the leaf valves 20 and 21, and the valve stopper 22 are fixed while being sandwiched between a step portion 3b of the piston rod 3 (Fig. 2) and the housing 5. In this way, the housing 5 also serves as a piston nut for attaching the piston 2 and valves laminated on the piston 2 to the piston rod 3.

As illustrated in Fig. 2, the frequency sensitive portion F1 includes the housing 5, a tube 6 that is accommodated in the housing 5, and an elastic member 7 that is attached to the inner circumference of the tube 6. The housing 5 includes a bottomed tubular casing 50 that includes an annular bottom portion 50a and a tubular portion 50b erected upward of Fig. 2 from the outer circumference of the bottom portion 50a and an annular lid portion 51 that is fixed to a front end portion corresponding to an upper end portion of the tubular portion 50b in Fig. 2 and is threaded into the outer circumference of the piston rod 3. Further, the tube 6 is inserted into the tubular portion 50b of the casing 50 and its outer circumference is held by the tubular portion 50b. The tube 6 is formed of metal and the elastic member 7 is attached to the inner circumference thereof by baking. The elastic member 7 is an elastomer such as rubber and fills the center portion of the tube 6 in the axial direction without a gap.

Then, a pressure chamber P is formed inside the tube 6 that is the inside of the housing 5 surrounded by the casing 50 and the lid portion 51 and the pressure chamber P is defined as a first chamber P1 on the upper side of Fig. 2 and a second chamber P2 on the lower side of Fig. 2 by the elastic member 7. The first chamber P1 communicates with the extension side chamber L1 by a passage hole 3c formed from the front end of the piston rod 3 to the side portion thereof and the second chamber P2 communicates with the compression side chamber L2 by a hole 50c penetrating the center portion of the bottom portion 50a of the casing 50. A top tubular throttle member 30 is fitted to the inner circumference of the front end portion of the piston rod 3 and an orifice 0 is formed by squeezing a part of the passage hole 3c using the throttle member 30.

Further, when the tube 6 to which the elastic member 7 is attached is inserted into the casing 50 and the lid portion 51 is inserted to caulk the front end of the tubular portion 50b of the casing 50 therein, the tube 6 is fixed while being sandwiched by the lid portion 51 and the bottom portion 50a of the casing 50. When the tube 6 is fixed in this way, one end of the tube 6 is pressed against the lid portion 51 and the other end thereof is pressed against the bottom portion 50a. Accordingly, it is possible to prevent the liquid inside the tube 6 from flowing to the outer circumference side and to prevent the first chamber P1 and the second chamber P2 from communicating with each other through a gap between the outer circumference of the tube 6 and the housing 5.

Since the thickness of the tubular portion 50b is thin at the front end side and is thick at the distal end side with respect to a step portion 50d provided on the inner circumference of the tubular portion 50b as a boundary, caulking is easily performed. Further, since the axial length of the thick portion in the tubular portion 50b is shorter than the axial length of the tube 6, the lid portion 51 does not interfere with the step portion 50d at the time of caulking the front end of the tubular portion 50b and hence an axial force is reliably applied to the tube 6.

Further, when the front end of the tubular portion 50b of the casing 50 is caulked and the tube 6 is sandwiched by the housing 5 as described above, the housing 5, the tube 6, and the elastic member 7 are attached to the piston rod 3 in an integrated state. The hole 50c provided in the bottom portion 50a of the casing 50 has a hexagonal cross-section. Here, when a tool is inserted into the hole 50c, a relative rotation with respect to the tool is prohibited. Thus, the hole 50c serves as a passage that communicates the compression side chamber L2 with the second chamber P2 and is also used as a tool insertion hole at the time of threading the housing 5 into the piston rod 3.

Hereinafter, an operation of the shock absorber A1 according to the embodiment will be described. During the extension operation of the shock absorber A1, the piston 2 moves upward in Fig. 1 with respect to the cylinder 1 so that the extension side chamber L1 is compressed and the compression side chamber L2 is extended. Then, since the pressure of the extension side chamber L1 increases and the pressure of the compression side chamber L2 decreases, a difference pressure is generated therebetween. Accordingly, the liquid of the extension side chamber L1 passes through the extension side damping passage 2a and moves to the compression side chamber L2. Further, when the pressure of the extension side chamber L1 increases, the pressure is transmitted to the first chamber P1 through the passage hole 3c and the orifice 0 so that the elastic member 7 is bent toward the second chamber P2. Then, the volume of the first chamber P1 increases and the volume of the second chamber P2 decreases by the increased amount. Accordingly, the liquid of the second chamber P2 is extruded to the compression side chamber L2 through the hole 50c.

In contrast, the piston 2 moves downward in Fig. 1 with respect to the cylinder 1 so that the compression side chamber L2 is compressed and the extension side chamber L1 is extended during the compression operation of the shock absorber A1. Then, since the pressure of the compression side chamber L2 increases and the pressure of the extension side chamber L1 decreases, a differential pressure is generated therebetween. Accordingly, the liquid of the compression side chamber L2 passes through the compression side damping passage 2b and moves to the extension side chamber L1. Further, when the pressure of the compression side chamber L2 increases, the pressure is transmitted to the second chamber P2 through the hole 50c so that the elastic member 7 is bent toward the first chamber P1.
Then, the volume of the second chamber P2 increases and the volume of the first chamber P1 decreases by the increased amount. Accordingly, the liquid of the first chamber P1 is extruded to the extension side chamber L1 through the passage hole 3c and the orifice 0.

In this way, since the liquid is extruded from the other of the first chamber P1 and the second chamber P2 as much as the liquid flowing into one of the first chamber P1 and the second chamber P2 by the elastic deformation of the elastic member 7 during the extension and compression operations of the shock absorber A1, the liquid apparently moves between the extension side chamber L1 and the compression side chamber L2 through the pressure chamber P in addition to the extension side damping passage 2a and the compression side damping passage 2b.

Here, when the piston speed is the same during the extension and compression operations of the shock absorber A1 even when the frequency of the vibration input to the shock absorber A1, that is, the frequency of the vibration during the extension and compression operations of the shock absorber A1 is a low frequency or a high frequency, the amplitude of the shock absorber A1 at the time of inputting the low-frequency vibration becomes larger than the amplitude of the shock absorber A1 at the time of inputting the high-frequency vibration. In this way, when the frequency of the vibration input to the shock absorber A1 is low, the amplitude is large. For this reason, the amount of the liquid moving between the extension side chamber L1 and the compression side chamber L2 for one cycle of the vibration increases and hence the amount of deformed elastic member 7 increases. Then, a differential pressure is generated between the first chamber P1 and the second chamber P2 as the elastic force of the elastic member 7 resisting the deformation increases. Accordingly, a differential pressure between the extension side chamber L1 and the first chamber P1 and a differential pressure between the compression side chamber L2 and the second chamber P2 decrease and a flow rate of the liquid moving through the pressure chamber P apparently decreases. Since the flow rate of the liquid moving in the extension side damping passage 2a and the compression side damping passage 2b increases as the apparent flow rate decreases, the damping force generated by the shock absorber A1 is kept high.

Further, since the amplitude is smaller than that of the low-frequency vibration input state when the high-frequency vibration is input to the shock absorber A1, the amount of the liquid moving between the extension side chamber L1 and the compression side chamber L2 for one cycle of the vibration decreases and hence the amount of deformed elastic member 7 also decreases. Then, the differential pressure between the first chamber P1 and the second chamber P2 decreases as the elastic force of the elastic member 7 resisting the deformation decreases. Accordingly, the first chamber P1 and the second chamber P2 have substantially the same pressure, the differential pressure between the extension side chamber L1 and the first chamber P1 and the differential pressure between the compression side chamber L2 and the second chamber P2 increase as compared with the low-frequency vibration input state, and the above-described apparent flow rate increases as compared with the low-frequency vibration input state. Since the flow rate of the liquid moving in the extension side damping passage 2a and the compression side damping passage 2b decreases as the apparent flow rate increases, the damping force generated by the shock absorber A1 decreases as compared with the low-frequency vibration input state.

Hereinafter, operational effects of the shock absorber A1 according to the embodiment will be described. In the embodiment, the hole 50c that communicates the compression side chamber L2 with the second chamber P2 has a hexagonal cross-section. Thus, the hole 50c can be also used as a tool insertion hole, but the shape of the hole 50c can be appropriately changed. For example, the above-described effects can be obtained even when a pair of holes is formed in the bottom portion 50a of the casing 50 of the housing 5 to be arranged in parallel in the radial direction.

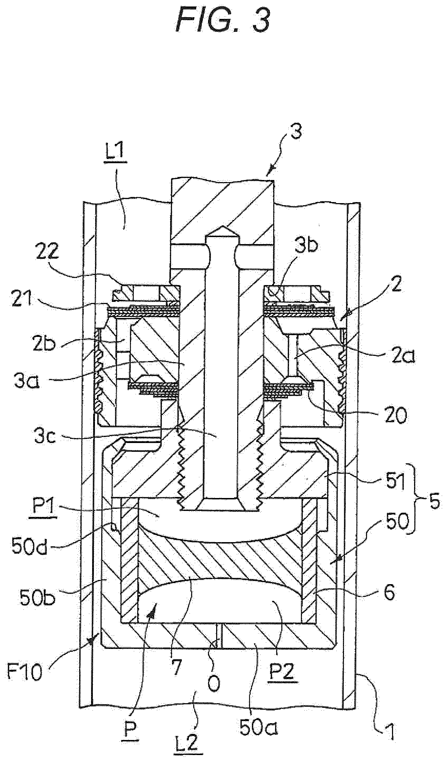

Further, in the embodiment, the orifice 0 is provided in the course of the passage hole 3c communicating the extension side chamber L1 with the first chamber P1. Further, the orifice 0 is formed in the throttle member 30 that is fitted to the inner circumference of the piston rod 3 and is provided in the course of the passage hole 3c. Thus, processing for forming the orifice 0 is easy. Further, when a resistance obtained by the orifice 0 needs to be changed, the resistance may be changed by another throttle member 30 with an orifice 0 having a different opening area and hence the tuning is easily performed. However, the orifice 0 may be provided in any one of the passage communicating the extension side chamber L1 with the first chamber P1 and the passage communicating the compression side chamber L2 with the second chamber P2.
For example, Fig. 3 illustrates a frequency sensitive portion F10 in which the orifice 0 is provided in the bottom portion 50a of the casing 50 of the housing 5 instead of the hole 50c. In this case, it is desirable to provide a two-sided width portion so that the tool is caught by the outer circumference of the housing 5.

Further, in the embodiment, the shock absorber A1 includes the tube 6 of which the inner circumference is integrated with the elastic member 7 by baking and the housing 5 in which the pressure chamber P is formed while sandwiching the tube 6 from both sides in the axial direction. According to the configuration, since the elastic member 7 is integrated with the tube 6 by baking, the elastic member 7 can strongly adhere to the tube 6. Accordingly, it is possible to easily and reliably prevent the elastic member 7 from being displaced in the tube 6 or being separated from the tube 6. In addition, it is possible to prevent a gap from being formed between the elastic member 7 and the tube 6. Further, since the tube 6 is sandwiched by the housing 5 from both sides in the axial direction, both end portions of the tube 6 in the axial direction are brought into close contact with the housing 5 to easily block a gap therebetween. That is, according to the above-described configuration, it is possible to easily and cheaply define the pressure chamber P by the elastic member 7.

Additionally, the method of attaching the elastic member 7 is not limited to the baking and can be appropriately changed. For example, the elastic member 7 may be formed in an annular sheet shape and the outer circumference portion thereof may be pressed against the inner circumference of the tube 6 by a ring or the like. When the elastic member 7 is attached in this way, the tube 6 may be eliminated and the elastic member 7 may be directly attached to the inner circumference of the tubular portion 50b of the casing 50. Further, the elastic member 7 may be directly attached to the inner circumference of the tubular portion 50b by baking. In this case, when the bottom portion 50a and the tubular portion 50b are individually formed and are integrated as the housing 5 by fitting, threading, welding, or the like, the elastic member 7 is easily attached to the inner circumference of the housing 5 by baking. Then, such modifications can be made regardless of the shape of the hole 50c and the position of the orifice 0.

Further, in the embodiment, the shock absorber A1 includes the cylinder 1, the piston 2 that is movably inserted into the cylinder 1 and defines the extension side chamber (one operation chamber) L1 and the compression side chamber (the other operation chamber) L2 inside the cylinder 1, the extension side damping passage 2a (the damping passage) and the compression side damping passage 2b (the damping passage) that communicate the extension side chamber L1 with the compression side chamber L2, the pressure chamber P that communicates with the extension side chamber L1 and the compression side chamber L2, and the elastic member 7 that defines the pressure chamber P as the first chamber P1 communicating with the extension side chamber L1 and the second chamber P2 communicating with the compression side chamber L2.

According to the above-described configuration, when the shock absorber A1 performs the extension and compression operations, the elastic member 7 is elastically deformed so that the volume ratio between the first chamber P1 and the second chamber P2 changes and the liquid inside the pressure chamber P flows into and out of the first chamber P1 and the second chamber P2 in response to the amount of elastic deformation, the liquid apparently has moved between the extension side chamber L1 and the compression side chamber L2 through the pressure chamber P. Since the apparent flow rate changes in response to the amount of elastic deformation and the flow rate of the extension side damping passage 2a and the compression side damping passage 2b changes in response to the change in flow rate, it is possible to obtain an effect of reducing a damping force at the time of inputting the high-frequency vibration in response to the frequency of the input vibration. Thus, since the shock absorber A1 exerts a high damping force in a case in which the input vibration frequency is low due to the turning or the like of the vehicle and exerts a low damping force in a case in which the input vibration frequency is high due to the passage of the vehicle on the unevenness of the road, it is possible to improve the ride comfort of the vehicle. Further, the spring constant of the elastic member 7 can be adjusted by changing a material or a thickness.

Here, in the conventional shock absorber that exerts the damping force in response to the frequency, the pressure chamber is defined by the free piston sliding on the inner circumference of the housing and the free piston is urged by the coil spring. In contrast, in the shock absorber A1, the pressure chamber P is defined by the elastic member 7 and the elastic member 7 serves as the partition wall of the free piston and also serves as a spring component that gives an urging force to the partition wall of the coil spring to return to a neutral position. Thus, in the shock absorber A1, it is possible to shorten the axial length of the housing 5 as compared with a case in which both the free piston and the coil spring are necessary. Thus, since it is possible to suppress an increase in the axial length of the shock absorber A1 even when the housing 5 is attached to the piston rod 3, it is possible to obtain satisfactory mountability of the shock absorber A1. Further, in the shock absorber A1, since the partition wall defining the pressure chamber P is formed as the elastic member 7 so as not to slide, high processing accuracy is not required and components can be decreased in cost. Thus, according to the shock absorber A1, it is possible to exert a damping force in response to a frequency and to decrease cost.

Additionally, the shock absorber A1 is of a single rod type in which the piston rod 3 extends only to one side of the piston 2, but may be of a double rod type in which the piston rod 3 extends to both sides of the piston 2.

Further, the shock absorber A1 is of a single tube type and compensates a change in cylinder internal volume corresponding to the piston rod protrusion volume of the piston rod entering and exiting the cylinder 1 by the gas chamber G. However, the shock absorber A1 may be of a double tube type in which an outer shell is provided on the outer circumference of the cylinder 1. In this way, when the shock absorber A1 is of a double tube type, a reservoir storing a liquid is formed between the outer shell and the cylinder 1 so that a change in cylinder internal volume is compensated by the reservoir.

Then, the above-described modifications can be made regardless of the shape of the hole 50c, the position of the orifice 0, and the attachment method of the elastic member 7.

### <Second Embodiment>

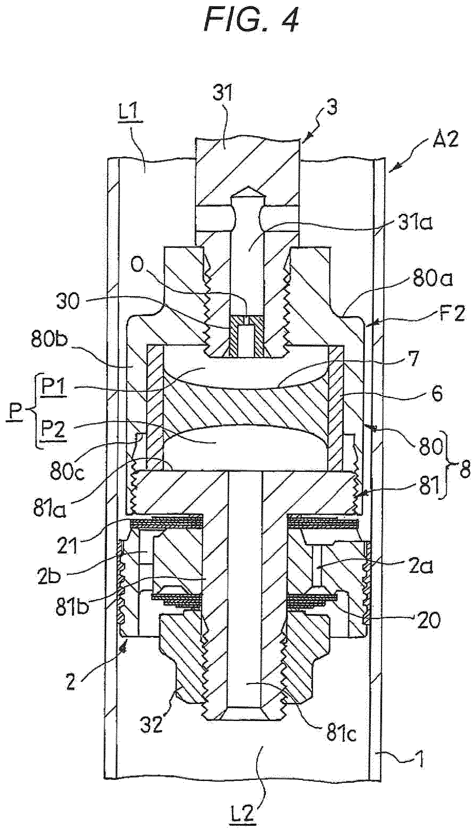

Similarly to the shock absorber A1 according to the first embodiment, a shock absorber A2 according to a second embodiment of the invention illustrated in Fig. 4 suppresses the vibration of the vehicle body by exerting the damping force while being interposed between the vehicle body and the axle of the vehicle. The shock absorber A2 of the embodiment has the same basic configuration and operation as those of the shock absorber A1 and has a difference in the position of the frequency sensitive portion. Thus, a configuration of the different portion will be described in detail below. Further, the same reference numerals will be given to the common components and a detailed description thereof will be omitted.

In the shock absorber A2 according to the embodiment, a frequency sensitive portion F2 is provided on the side of the extension side chamber L1 of the piston 2 and a housing 8 of the frequency sensitive portion F2 constitutes a part of the piston rod 3. Specifically, the shock absorber A2 includes a shaft portion 31 in which the piston rod 3 is supported by a rod guide, a top tubular casing 80 that is connected to the front end portion of the shaft portion 31, and a piston holding portion 81 that covers an opening end portion of the casing 80 and to which the piston 2 is attached. The housing 8 is formed by including the casing 80 and the piston holding portion 81.

The casing 80 includes an annular top portion 80a that is threaded to the outer circumference of the front end portion of the shaft portion 31 and a tubular portion 80b that extends downward in Fig. 4 from the outer circumference of the top portion 80a and a screw groove is formed on the inner circumference of the front end portion corresponding to the lower end portion of the tubular portion 80b in Fig. 4. Further, the piston holding portion 81 includes a lid portion 81a that is threaded into the inner circumference of the tubular portion 80b by using the screw groove and an attachment shaft 81b that extends downward in Fig. 4 from the center portion of the lid portion 81a.

Then, the leaf valve 21 is stacked on one side of the piston 2, the leaf valve 20 is stacked on the other side of the piston 2, the attachment shaft 81b is inserted from the leaf valve 21 into the center hole, and a piston nut 32 is threaded to the front end of the attachment shaft 81b. Then, the piston 2 and the leaf valves 20 and 21 are fixed by sandwiching the inner circumference portion between the lid portion 81a and the piston nut 32. In the embodiment, the lid portion 81a also serves as a valve stopper.

Further, the frequency sensitive portion F2 includes the housing 8 formed by including the casing 80 and the piston holding portion 81, the tube 6 that is accommodated in the housing 8, and the elastic member 7 that is attached to the inner circumference of the tube 6. The tube 6 is inserted into the tubular portion 80b of the casing 80 so that the outer circumference is held by the tubular portion 80b. Similarly to one embodiment, the tube 6 is formed of metal and the elastic member 7 is attached to the inner circumference thereof by baking. Similarly to one embodiment, the elastic member 7 is also formed of elastomer such as rubber so that the center portion of the tube 6 in the axial direction is filled without a gap.

Then, the pressure chamber P is formed inside the housing 8 surrounded by the casing 80 and the lid portion 81a and inside the tube 6 and the pressure chamber P is defined by the elastic member 7 as the first chamber P1 on the upper side of Fig. 4 and the second chamber P2 on the lower side of Fig. 4. The first chamber P1 communicates with the extension side chamber L1 by a passage hole 31a formed from the front end of the shaft portion 31 to the side portion thereof and the second chamber P2 communicates with the compression side chamber L2 by a passage hole 81c penetrating the center portion from the lid portion 81a to the attachment shaft 81b of the piston holding portion 81. Then, the top tubular throttle member 30 is fitted to the inner circumference of the front end portion of the shaft portion 31 and the orifice 0 is formed by squeezing a part of the passage hole 31a using the throttle member 30.

Further, when the tube 6 to which the elastic member 7 is attached is inserted into the casing 80 and the piston holding portion 81 is threaded to the tubular portion 80b, the tube 6 is fixed while being sandwiched between the top portion 80a of the casing 80 and the lid portion 81a of the piston holding portion 81. When the tube 6 is fixed in this way, one end of the tube 6 is pressed against the top portion 80a and the other end thereof is pressed against the lid portion 81a. Accordingly, it is possible to prevent the liquid inside the tube 6 from flowing to the outer circumference side and to prevent the first chamber P1 and the second chamber P2 from communicating with each other through a gap between the outer circumference of the tube 6 and the housing 8.

Since the thickness of the tubular portion 80b is thin at the front end side and is thick at the distal end side with respect to a step portion 80c provided on the inner circumference of the tubular portion 80b as a boundary and a screw groove for threading the piston holding portion 81 is formed on the inner circumference of the front end side. Further, since the axial length of the thick portion of the tubular portion 80b is shorter than the axial length of the tube 6, the lid portion 81a does not interfere with the step portion 80c when the piston holding portion 81 is threaded into the tubular portion 80b and hence an axial force is reliably applied to the tube 6.

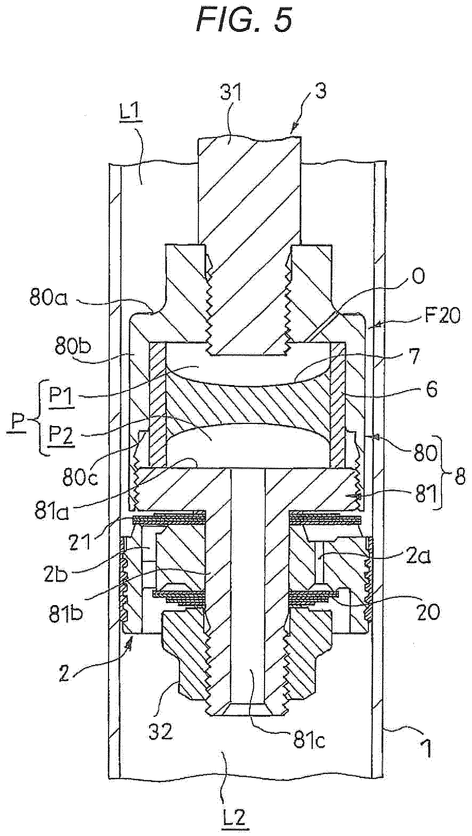

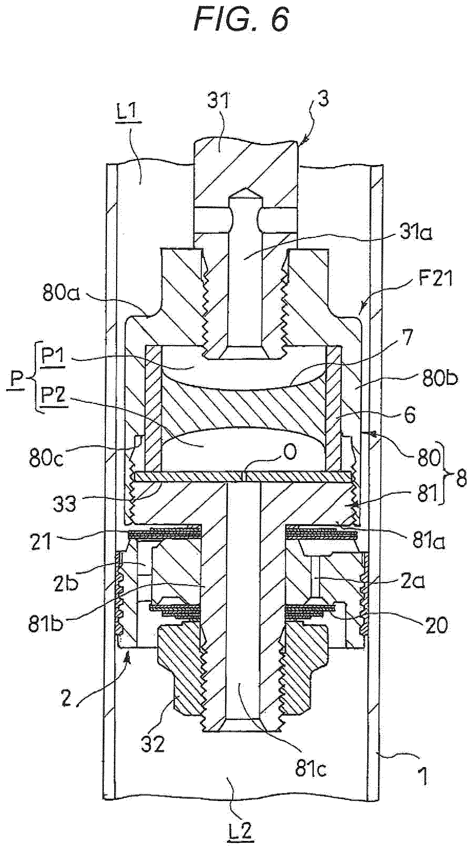

Hereinafter, operational effects of the shock absorber A2 according to the embodiment will be described. In the embodiment, the orifice 0 is provided in the course of the passage hole 31a communicating the extension side chamber L1 with the first chamber P1. Further, the orifice 0 is formed in the throttle member 30 that is fitted to the inner circumference of the shaft portion 31 and is provided in the course of the passage hole 31a. Thus, processing for forming the orifice 0 is easy. Further, when a resistance obtained by the orifice 0 needs to be changed, the resistance may be changed by another throttle member 30 with an orifice 0 having a different opening area and hence the tuning is easily performed. However, the orifice 0 may be provided in any one of the passage communicating the extension side chamber L1 with the first chamber P1 and the passage communicating the compression side chamber L2 with the second chamber P2. For example, Fig. 5 illustrates a frequency sensitive portion F20 in which the orifice 0 is provided in the top portion 80a of the casing 80 of the housing 8. Further, Fig. 6 illustrates a frequency sensitive portion F21 in which the orifice 0 is provided in a plate 33 fixed while being sandwiched between the tube 6 and the lid portion 81a.

Further, in the embodiment, the shock absorber A2 includes the tube 6 of which the inner circumference is integrated with the elastic member 7 by baking and the housing 8 in which the pressure chamber P is formed therein while sandwiching the tube 6 from both sides in the axial direction. According to the configuration, since the elastic member 7 is integrated with the tube 6 by baking, the elastic member 7 can strongly adhere to the tube 6. Accordingly, it is possible to easily and reliably prevent the elastic member 7 from being displaced inside the tube 6 or being separated from the tube 6. In addition, it is possible to prevent a gap from being formed between the elastic member 7 and the tube 6. Further, since the tube 6 is sandwiched by the housing 8 from both sides in the axial direction, both end portions of the tube 6 in the axial direction are brought into close contact with the housing 8 to easily block a gap therebetween. That is, according to the above-described configuration, it is possible to easily and cheaply define the pressure chamber P by the elastic member 7.

Additionally, the method of attaching the elastic member 7 is not limited to the baking and can be appropriately changed. For example, the elastic member 7 may be formed in an annular sheet shape and the outer circumference portion thereof may be pressed against the inner circumference of the tube 6 by a ring or the like. When the elastic member 7 is attached in this way, the tube 6 may be eliminated and the elastic member 7 may be directly attached to the inner circumference of the tubular portion 80b of the casing 80. Further, the elastic member 7 may be directly attached to the inner circumference of the tubular portion 80b by baking. In this case, when the top portion 80a and the tubular portion 80b are individually formed and are integrated as the housing 8 by fitting, threading, welding, or the like, the elastic member 7 is easily attached to the inner circumference of the housing 8 by baking. Then, such modifications can be made regardless of the position of the orifice 0.

Further, in the embodiment, the shock absorber A2 includes the cylinder 1, the piston 2 that is movably inserted into the cylinder 1 and defines the extension side chamber (one operation chamber) L1 and the compression side chamber (the other operation chamber) L2 inside the cylinder 1, the extension side damping passage 2a (the damping passage) and the compression side damping passage 2b (the damping passage) that communicate the extension side chamber L1 with the compression side chamber L2, the pressure chamber P that communicates with the extension side chamber L1 and the compression side chamber L2, and the elastic member 7 that defines the pressure chamber P as the first chamber P1 communicating with the extension side chamber L1 and the second chamber P2 communicating with the compression side chamber L2.

According to the above-described configuration, when the shock absorber A2 performs the extension and compression operations, the elastic member 7 is elastically deformed so that the volume ratio between the first chamber P1 and the second chamber P2 changes and the liquid inside the pressure chamber P flows into and out of the first chamber P1 and the second chamber P2 in response to the amount of elastic deformation, the liquid apparently has moved between the extension side chamber L1 and the compression side chamber L2 through the pressure chamber P. Since the apparent flow rate changes in response to the amount of elastic deformation and the flow rate of the extension side damping passage 2a and the compression side damping passage 2b changes in response to the change in flow rate, it is possible to obtain an effect of reducing a damping force at the time of inputting the high-frequency vibration in response to the frequency of the input vibration. Thus, since the shock absorber A2 exerts a high damping force in a case in which the input vibration frequency is low due to the turning or the like of the vehicle and exerts a low damping force in a case in which the input vibration frequency is high due to the passage of the vehicle on the unevenness of the road, it is possible to improve the ride comfort of the vehicle. Further, the spring constant of the elastic member 7 can be adjusted by changing a material or a thickness.

Further, in the shock absorber A2, it is possible to shorten the axial length of the housing 8 as compared with the conventional shock absorber requiring both the free piston and the coil spring. Thus, since it is possible to suppress an increase in the axial length of the shock absorber A2 even when the housing 8 is provided in the piston rod 3, it is possible to obtain satisfactory mountability of the shock absorber A2. In the shock absorber A2, since the partition wall defining the pressure chamber P is formed as the elastic member 7 so as not to slide, high processing accuracy is not required and components can be decreased in cost. Thus, according to the shock absorber A2, it is possible to exert a damping force in response to a frequency and to decrease cost.

Additionally, the shock absorber A2 is of a single rod type in which the piston rod 3 extends only to one side of the piston 2, but may be of a dual rod type in which the piston rod 3 extends to both sides of the piston 2.

Further, the shock absorber A2 is of a single tube type and compensates a change in cylinder internal volume corresponding to the piston rod protrusion volume of the piston rod entering and exiting the cylinder 1 by the gas chamber. However, the shock absorber A2 may be of a double tube type in which an outer shell is provided on the outer circumference of the cylinder 1. In this way, when the shock absorber A2 is of a double tube type, a reservoir storing a liquid is formed between the outer shell and the cylinder 1 so that a change in cylinder internal volume is compensated by the reservoir.

Then, the above-described modifications can be made regardless of the position of the orifice 0 and the method of attaching the elastic member 7.

While the preferred embodiments of the invention have been described in detail, improvements, modifications, and changes can be made without departing from the scope of the claims.

This application claims priority based on Japanese Patent Application No. 2016-076256 filed on April 6, 2016 in Japan Patent Office, the entire contents of which are incorporated herein by reference.

## Claims

1. A shock absorber comprising:
a cylinder;
a piston that is movably inserted into the cylinder to define two operation chambers inside the cylinder;
a damping passage that communicates the two operation chambers with each other;
a pressure chamber that communicates with the two operation chambers; and
an elastic member that defines a first chamber communicating with the one operation chamber and a second chamber communicating with the other operation chamber inside the pressure chamber.

2. The shock absorber according to claim 1, further comprising:
a tube of which an inner circumference is integrated with the elastic member by baking; and
a housing that has the pressure chamber formed in the housing and sandwiches the tube from both sides in an axial direction.
